# EUROPEAN PATENT APPLICATION

(11) **EP 2 607 568 A1**
(43) Date of publication of application: **26.06.2013**
(21) Application number: 11817955.5
(22) Date of filing: 11.04.2011
(51) Int. Cl.: E04D 13/00, E04D 13/18, H01L 31/042

(54) **FIXING STRUCTURE FOR PLATE-SHAPED MODULE**

(30) Priority: 16.08.2010 JP 2010181807
(71) Applicant: Yanegijutsukenkyujo Co. Ltd., Takamaha-shi, Aichi 444-1324 (JP)
(72) Inventor: KOBAYASHI Shuichi, Takahama-shi Aichi 444-1324 (JP)
(74) Representative: Epping - Hermann - Fischer
(86) International application number: PCT/JP2011/059000
(87) International publication number: WO 2012/023306

(57) **Abstract**

A securing structure which can enhance construction property of a plate-like module to be installed onto roof can be provided. A plate-like module securing structure includes a securing member (10) including a main body portion (11) a part of which projects downward with respect to a solar cell module (1) as the plate-like module and a pair of locking pieces (12) that project outward from the main body portion in reverse directions and are capable of being put into the main body portion against elastic forces. The pair of locking pieces direct to a direction substantially orthogonal to a lengthwise direction of a supporting member (3) mounted on a roof material, a part of the main body portion is inserted into the supporting member from the upper side such that the pair of locking pieces are locked to the supporting member so that the solar cell module is secured to the supporting member.

## Description

### FIELD OF THE INVENTION

The present invention relates to a plate-like module securing structure for securing a plate-like module such as a solar-powered water heater and a solar cell module onto a roof or the like.

### BACKGROUND OF THE INVENTION

Conventionally, as a securing structure for installing, for example, a solar cell module as a plate-like module on roof, the following securing structure has been proposed (for example, Patent Document 1: Japanese Patent Application Laid-open No. 2008-101466). That is, the securing structure includes a base which includes a rail groove and is mounted on a roof material, a bolt of which head portion is inserted into the rail groove of the base and of which external thread portion projects upward from the base, a securing member (pressing force member) which has a hole through which the bolt is capable of passing and is capable of being locked with a flange portion of the solar cell module, and a nut which is screwed together with the external thread portion of the bolt from the upper side of the securing member. Further, the nut is fastened on the bolt so as to pressurize the flange portion on the base with the securing member and secure the solar cell module. With the securing structure as disclosed in Patent Document 1, the solar cell modules can be secured by being pressurized at both ends of the securing member at the same time.

Further, the following technique has been proposed (for example, Patent Document 2: Japanese Patent Application Laid-open No. 2008-303660). With the technique, a solar cell module is secured by inserting a side surface of the solar cell module into between a to-be bonded portion and a base portion of a securing member. The securing member includes a plate-like securing portion which has a securing hole for securing the securing member onto a roof material, the base portion which is formed at one end side of the securing portion and has a predetermined height, an erected portion which is erected upward from a substantially center of the base portion, and the plate-like to-be bonded portion which extends from an upper end of the erected portion so as to be substantially parallel with the base portion.

With the technique as disclosed in Patent Document 2, the side surface of the solar cell module is inserted into between the base portion and the to-be bonded portion at a side opposite to the securing portion with respect to the erected portion, and then, a predetermined screw is screwed into the roof material through the securing hole of the securing portion so as to secure the securing member onto the roof material. Further, a side surface of a subsequent solar cell module is inserted into between the base portion and the to-be bonded portion at the side of the securing portion. With this, the solar cell modules can be inserted and secured at both sides of the erected portion. Therefore, a plurality of solar cell modules can be secured from one side (eaves side) to the other side (ridge side) of the roof material sequentially.

However, with the conventional securing structure, the securing member which secures a plate-like module such as a solar cell module is secured by using a bolt, a nut, a screw, or the like. Therefore, troublesome tasks are required for attaching and detaching the securing member and construction property is bad, resulting in a problem that cost taken to install the plate-like module is increased.

### DISCLOSURE OF THE INVENTION

### PROBLEMS TO BE RESOLVED BY THE INVENTION

In view of the above circumstance, an object of the present invention is to provide a plate-like module securing structure which makes it possible to enhance construction property of a plate-like module such as a solar cell module to be installed on a roof material.

### MEANS TO RESOLVE THE PROBLEMS

In order to achieve the above-described object, a plate-like module securing structure according to an aspect of the invention "includes a securing member including a main body portion at least a part of which projects downward with respect to a side of a plate-like module, and a pair of locking pieces that project outward from the main body portion in reverse directions and are capable of being put in the main body portion against elastic forces, wherein the securing member is arranged such that the pair of locking pieces direct to a direction which is substantially orthogonal to a lengthwise direction of a supporting member mounted on a roof material, at least a part of the main body portion is inserted into the supporting member from the upper side such that the locking pieces are located in the supporting member, and the pair of locking pieces are locked to the supporting member so that the plate-like module is secured to the supporting member."

As the "plate-like module", a "solar cell module formed by surrounding outer circumferences of plate-like solar cell panels with frame bodies", a "solar-powered water heating panel", a "solar heat collection panel", a "soundproof panel", a "light shielding panel", and the like can be exemplified.

Further, as the "main body portion", a "main body portion formed in a box shape", a "main body portion formed in a cylindrical shape", a "main body portion formed into a solid shape", and the like can be exemplified. In addition, as the "locking piece", a "plate-like locking piece of which one end side is continuous to the main body portion and the other end side is formed as a free end separated from the main body portion and projects outward from the main body portion with an elastic force of the one end side which is continuous to the main body portion", a "locking piece which is supported in the main body portion in a slidable manner and is biased so as to project outward from the main body portion with an elastic member such as a spring arranged in the main body portion", and the like can be exemplified.

Further, as the "securing member", a "securing member which is integrated with the plate-like module", a "securing member which is formed as a separated body from the plate-like module", and the like can be exemplified. In addition, a configuration in which sides of adjacent plate-like modules can be secured by one securing member may be employed or a configuration in which a side of one plate-like module can be secured by one securing member may be employed. Moreover, as the "securing member", a "securing member in which the main body portion, the locking pieces, and the like are integrally formed", a "securing member in which the main body portion, the locking pieces, and the like are formed as separate bodies for each of parts appropriately", or the like may be employed. Further, as the "supporting member", it is sufficient that the supporting member has an opening through which the main body portion of the securing member can pass on an upper surface thereof", and a "supporting member which is formed to be longer than one plate-like module", a "supporting member which is formed to be shorter than one plate-like module", and the like can be exemplified.

As the expression "the locking pieces are locked to the supporting member", it is sufficient that the locking pieces are locked so as to restrict the securing member from moving at least upward", and a case where "the locking pieces are made to abut against and are locked to a lower surface of a portion of the supporting member, which extends in the lateral direction", a case where "the locking pieces are inserted into holes penetrating through the supporting member in the lateral direction so as to be locked", and the like can be exemplified.

With this, the pair of locking pieces which project outward from the main body portion of the securing member are put in the main body portion, the main body portion of the securing member is inserted into a predetermined supporting member mounted on the roof material from the upper side, and the pair of locking pieces are made to project outward from the main body portion with the elastic forces so as to be locked to the supporting member. This makes it possible to secure the plate-like module such as a solar cell module to the supporting member through the securing member easily without using a bolt, a nut, a screw, or the like unlike the conventional techniques. Therefore, the plate-like module securing structure having high construction property can be provided and construction cost taken to install the plate-like module can be reduced.

Meanwhile, with the securing structure as disclosed in Patent Document 1, a space for fastening the nut which secures the securing member is required between the plate-like modules so that a space is innevitably formed between the plate-like modules. Therefore, there is a problem that an overall area of the plate-like modules which can be installed on an area on the roof becomes relatively small due to the space. Due to this, when the plate-like module using solar energy, such as a solar cell module and a solar-powered water heater, is used, for example, an overall area of the plate-like modules is smaller relative to the area on the roof. This arises a problem that energy efficiency is lowered. In comparison therewith, with the securing structure according to the aspect of the invention, as described above, the plate-like module is secured to the supporting member with the locking pieces of the securing member. Therefore, a space for fastening a bolt, a nut, or the like is not required to be ensured between the plate-like modules so as to make the space between the plate-like modules as small as possible. Accordingly, the overall area of the plate-like modules can be made as large as possible relative to the area on the roof, thereby enhancing energy efficiency.

Further, it is desirable that the locking pieces of the securing member are inserted and locked into the holes penetrating through the supporting member in the lateral direction or the surfaces of the securing member which direct to the lengthwise direction of the supporting member are made to abut against notch portions or the like formed on the supporting member. In such a case, the securing member inserted into the supporting member can be prevented from moving in the lengthwise direction of the supporting member. With this, the plate-like module can be prevented from moving along the supporting member easily while a configuration with which the plate-like module is secured to the supporting member and the plate-like module is prevented from moving along the supporting member is not required to be provided separately in addition to the securing member. This makes it possible to enhance construction property of the plate-like module.

In the plate-like module securing structure according to the aspect of the invention, a configuration in which "the securing member has the locking pieces of which side faces are formed as inclined surfaces that are inclined obliquely so as to be closer to a side of the main body portion toward the lower side" may be employed in addition to the above-mentioned configuration.

With this configuration, the side surfaces of the locking pieces on the securing member are formed as the inclined surfaces that get closer to the side of main body portion toward the lower side. Therefore, when the main body portion of the securing member is inserted into the supporting member from the upper side, if the inclined surfaces of the locking pieces abut against the supporting member, forces of pressing the locking pieces to the side of the main body portion act through the inclined surfaces. Accordingly, the locking pieces are naturally put in the main body portion against the elastic forces with the downward movement of the main body portion. Then, if the locking pieces are inserted into the supporting member and abutment between the inclined surfaces and the supporting member is released, the locking pieces project from the main body portion with the elastic forces so as to be locked to the supporting member.

Accordingly, when the securing member is locked and secured to the supporting member, the pair of locking pieces are not required to be put in the main body portion previously. The locking pieces can be put in the main body portion only by inserting the main body portion into the supporting member from the upper side. Therefore, the plate-like module can be secured to the supporting member through the securing member easily. This makes it possible to enhance construction property of the plate-like module.

In the plate-like module securing structure according to the aspect of the invention, a configuration in which "the securing member further includes operation pieces that are coupled to upper ends of the locking pieces in the main body portion and project outward from the main body portion at the upper sides with respect to the locking pieces."

With this, the operation pieces that are coupled to the upper ends of the pair of locking pieces respectively and project outward are provided. Therefore, if the pair of operation pieces are operated to put the locking pieces into the main body portion in a state where the plate-like module is secured to the supporting member with the securing member, locking between the locking pieces and the supporting member can be cancelled. This enables the securing member to be detached from the supporting member easily. Accordingly, when a position of the securing member is changed during construction of the plate-like module or when the plate-like module is detached from the supporting member for maintenance or the like, the locking by the locking pieces can be cancelled easily by operating the operation pieces so as to detach the securing member from the supporting member. This makes it possible to enhance construction property, maintenance property, and the like of the plate-like module.

It is to be noted that front ends of the operation pieces may be made to extend to the outer sides with respect to the supporting member. This enables the operation pieces to be operated easily in a state where the securing member is secured to the supporting member, thereby improving operability.

Further, the operation pieces may be made to abut against an upper surface of the supporting member when the locking pieces of the securing member are locked to the supporting member. This makes it possible to restrict the main body portion from moving downward by the operation pieces. Therefore, the main body portion can be prevented from going down in the supporting member uselessly and the securing member can be secured to the supporting member more firmly by holding the supporting member between the locking pieces and the operation pieces.

In addition, in the plate-like module securing structure according to the aspect of the invention, a configuration in which "the securing member is formed as a separate body from the plate-like module and the securing member further includes a supporting piece that is arranged on an upper portion of the main body portion and supports a side of the plate-like module."

As the "supporting piece", a "plate-like supporting piece which can abut against an upper surface of the side of the plate-like module", a "supporting piece which can be engaged with a hook-shaped engaging portion formed on a side surface of the plate-like module", and the like can be exemplified. Further, a configuration in which a side of one plate-like module can be supported by the supporting piece or a configuration in which sides of two plate-like modules which are arranged to be adjacent to each other can be supported by the supporting piece may be employed.

With this, since the securing member is formed as a separate body from the plate-like module, an existing plate-like module can be secured to the supporting member by using the securing member depending on modes of the supporting piece. Cost taken to install can be reduced by using an inexpensive existing plate-like module. In addition, since the securing member is formed as a separate body from the plate-like module, adjacent plate-like modules can be secured with one securing member. When sides of the plate-like modules are supported (secured) by the supporting piece in a state where the securing member is locked and secured to the supporting member, a plurality of plate-like modules can be secured onto the roof material from one side (for example, eaves side) to the other side (for example, ridge side) sequentially. Accordingly, the plurality of plate-like modules can be installed on the roof material easily. This makes it possible to enhance construction property of the plate-like module.

### EFFECT OF THE INVENTION

As described above, according to the invention, a plate-like module securing structure which can enhance construction property, such as a solar cell module to be installed on a roof material, can be provided.

### BRIEF DESCRIPTION OF THE DRAWINGS

Fig. 1 is a perspective view illustrating a plate-like module securing structure as an embodiment of the invention.
Fig. 2A is a side cross-sectional view illustrating main parts of the plate-like module securing structure in Fig. 1 in an enlarged manner, and Fig. 2B is a front cross-sectional view illustrating the main parts.
Fig. 3 is a perspective view illustrating a securing member and a supporting member in the plate-like module securing structure in Fig. 1 in a state where they are exploded.
Fig. 4A is a descriptive view illustrating the plate-like module securing structure in Fig. 1 in a state before a plate-like module is installed, and Fig. 4B is a descriptive view illustrating a state where one plate-like module is secured by the securing member.
Fig. 5A is a side cross-sectional view illustrating main parts in an embodiment in which modes of a frame body of the plate-like module and a supporting piece of the securing member are different from those in Fig. 1 and Fig. 5B is a side cross-sectional view illustrating main parts in an embodiment in which the modes are further different from those in Fig. 5A in an enlarged manner.
Fig. 6A is a perspective view illustrating a supporting member in a mode which is different from the supporting member in Fig. 1 together with the securing member, and Fig. 6B is a perspective view illustrating a supporting member in a mode which is further different from that in Fig. 6A together with the securing member.
Fig. 7A is a front cross-sectional view illustrating a plate-like module securing structure in an embodiment which is different from that in Fig. 1 in a state where the plate-like module is removed, and Fig. 7B is a perspective view of Fig. 7A.
Fig. 8 is a front cross-sectional view illustrating a plate-like module securing structure in an embodiment which is different from that in Fig. 1 in a state where the plate-like module is removed.
Fig. 9 is a side cross-sectional view illustrating a plate-like module securing structure in an embodiment which is further different from that in Fig. 1.
Fig. 10A is a side cross-sectional view illustrating a plate-like module securing structure in an embodiment which is further different from that in Fig. 1, Fig. 10B is a front cross-sectional view of Fig. 10A, and Fig. 10C is a side cross-sectional view illustrating the plate-like module securing structure in Fig. 10A in an exploded manner.
Fig. 11 is a side cross-sectional view illustrating a plate-like module securing structure in an embodiment which is further different from that in Fig. 1 in a partially exploded state.

### MODE FOR CARRYING OUT THE INVENTION

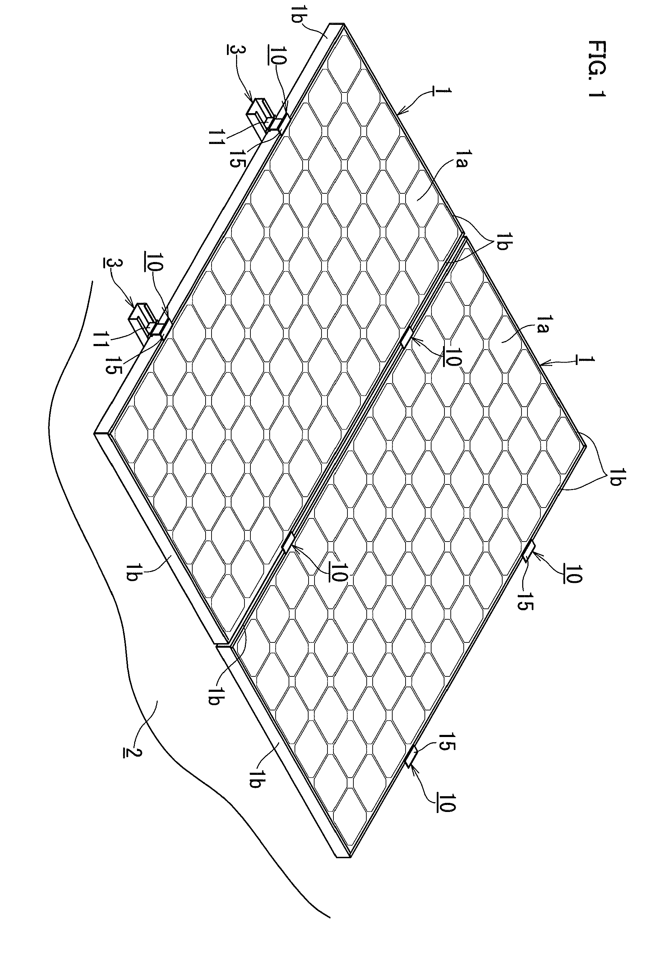

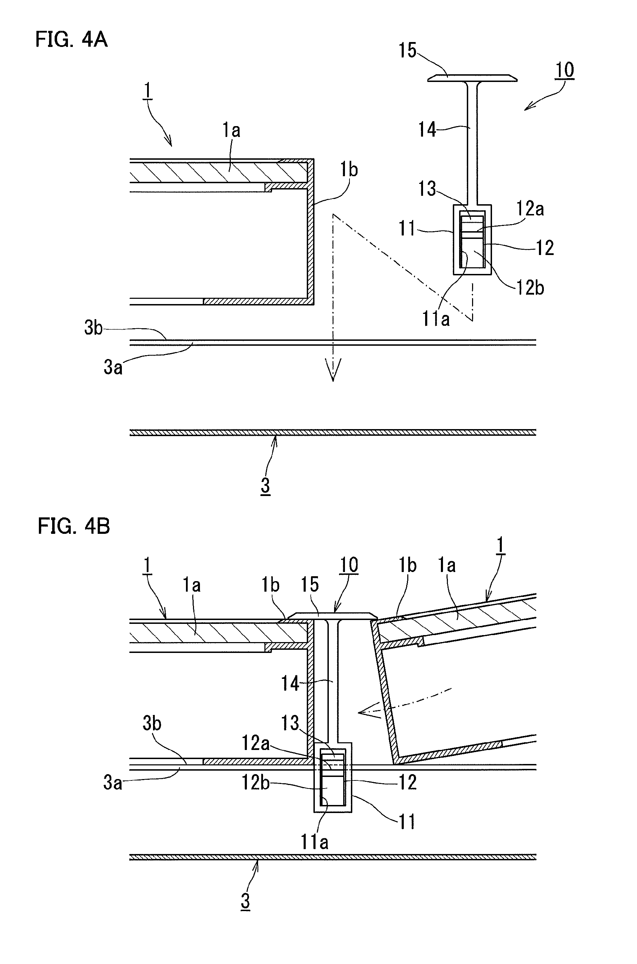

A plate-like module securing structure as an embodiment of the invention is described with reference to Fig. 1 through Figs. 4A and 4B.

As illustrated in Fig. 1, the plate-like module securing structure (hereinafter, also referred to as securing structure simply) in the embodiment is a securing structure for securing a solar cell module 1 as a plate-like module on roof. The solar cell module 1 is obtained by surrounding outer circumferential sides of solar cell panels 1a with frame bodies 1b made of a metal. The plate-like module securing structure in the embodiment includes long supporting members 3 and securing members 10. The solar cell module 1 is installed on the supporting members 3 and the supporting members 3 are mounted on a roof material 2 at a predetermined interval. The securing members 10 secure the solar cell module 1 to the supporting members 3.

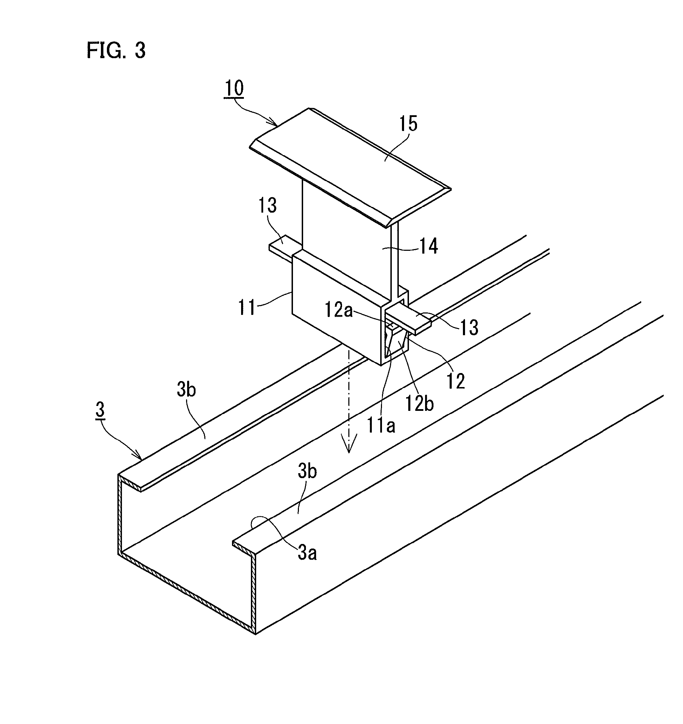

The roof material 2 is a roof tile, a slate, a roofboard, or the like although not illustrated in the drawings in detail. Further, as illustrated in Fig. 3 and the like, the supporting member 3 is formed as a so-called C channel having an opening 3a. To be more specific, the supporting member 3 is made of a metal such as an aluminum alloy and a cross-sectional shape of the supporting member 3 is an angular C shape. The supporting member 3 is mounted on the roof material 2 with a well-known method such that the opening 3a directs upward. Upper surfaces at both sides of the opening 3a correspond to installing portions 3b on which the solar cell module 1 is installed.

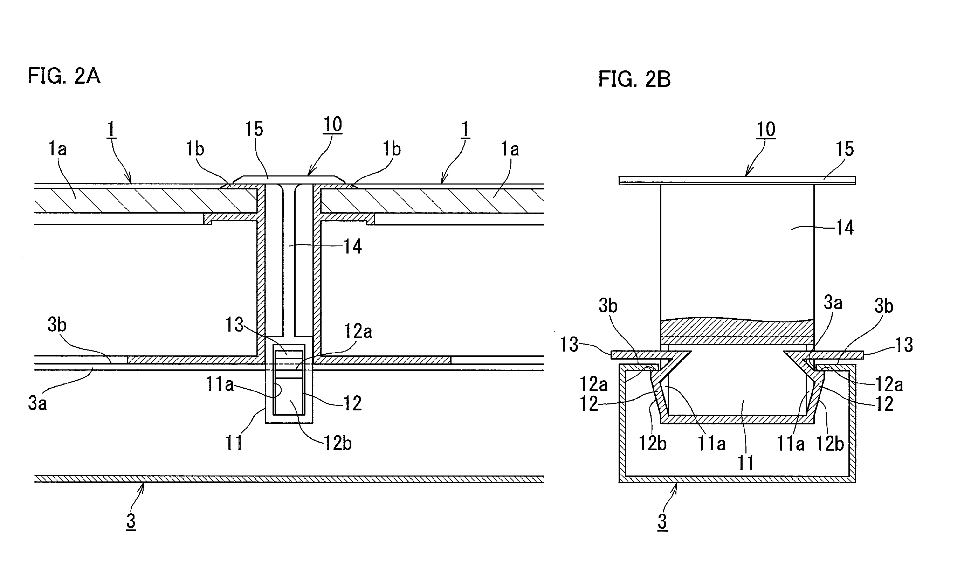

As illustrated in Figs. 2A and 2B, Fig. 3, and the like, the securing member 10 includes a main body portion 11, a pair of locking pieces 12, plate-like operation pieces 13, a plate-like shaft portion 14, and a plate-like supporting piece 15. The main body portion 11 has an outer shape of rectangular parallelepiped and extends to be slightly shorter than a width of the opening 3a of the supporting member 3. The pair of locking pieces 12 project outward from both ends of the main body portion 11 in the lengthwise direction (width direction of the opening 3a of the supporting member 3). The operation pieces 13 are coupled to upper ends of the locking pieces 12 in the main body portion 11 and project outward from both ends of the main body portion 11 in the lengthwise direction at upper positions with respect to the locking pieces 12. The operation pieces 13 project outward so as to be longer than the locking pieces 12. The shaft portion 14 extends upward from an upper end of the main body portion 11. The supporting piece 15 extends from an upper end of the shaft portion 14 to both sides in the lateral direction.

The main body portion 11 of the securing member 10 is formed into an angular cylindrical shape having openings 11a at both ends in the lengthwise direction. In the main body portion 11, lower ends of the locking pieces 12 are coupled to lower sides of the openings 11a and the locking piece 12 and the operation pieces 13 project outward from the openings 11a. Further, the locking pieces 12 of the securing member 10 include flat locking portions 12a. The locking portions 12a are formed on upper ends of the locking pieces 12, which project to outer sides with respect to the main body portion 11, and abut against lower surfaces of the installing portions 3b of the supporting member 3. Further, the locking pieces 12 are formed such that sides (side surfaces) which are lower than the locking portions 12a are inclined surfaces 12b. The inclined surfaces 12b are inclined obliquely so as to be closer to the side of the main body portion 11 toward the lower side. Lower ends of the inclined surfaces 12b are coupled to lower sides of the openings 11a of the main body portion 11 in an elastically deformable state.

As illustrated in Fig. 2B and the like, the operation pieces 13 of the securing member 10 are formed in the following manner. That is, base end sides of the operation pieces 13, which are located in the main body portion 11, are integrally coupled to the locking pieces 12 at the inner side with respect to the locking portions 12a on the upper ends of the locking pieces 12. Further, the operation pieces 13 are located at the upper sides with respect to the upper surfaces of the installing portions 3b in a state where the locking portions 12a of the locking pieces 12 are made to abut against the lower surfaces of the installing portions 3b of the supporting member 3. In addition, the operation pieces 13 have such lengths that upper ends thereof extend to the outer sides with respect to the side surfaces of the supporting member 3.

The shaft portion 14 of the securing member 10 extends upward from the main body portion 11 at a substantially center in the direction in which the supporting member 3 extends. The shaft portion 14 extends upward to a height which is substantially the same as a height of the solar cell modules 1 (frame bodies 1b) installed on the installing portions 3b in a state where the locking portions 12a of the locking pieces 12 are made to abut against the lower surfaces of the installing portions 3b of the supporting member 3. Further, as illustrated in Fig. 2A, the supporting piece 15 of the securing member 10 extends from the shaft portion 14 to the outer side largely with respect to the main body portion 11 in the direction which is the same as the direction in which the supporting member 3 extends. The lower surface of the supporting piece 15 is made to abut against the upper surfaces of the frame bodies 1b on the solar cell modules 1.

As illustrated in Figs. 2A and 2B, upward movement of the securing member 10 is restricted by inserting a lower portion of the main body portion 11 into the supporting member 3 through the opening 3a of the supporting member 3 and making the locking portions 12a of the locking pieces 12 abut against the lower surfaces of the installing portions 3b. Further, downward movement of the securing member 10 is restricted by making the lower surface of the supporting piece 15 abut against the upper surfaces of the solar cell modules 1 installed on the installing portions 3b of the supporting member 3. In this manner, the sides of the solar cell modules 1 are held between the installing portions 3b and the supporting piece 15 so as to be secured.

In the embodiment, the solar cell modules 1 are held between the installing portions 3b of the supporting member 3 and the supporting piece 15 of the securing member 10. The solar cell modules 1 do not slide in the directions along surfaces thereof due to friction resistance generated between the solar cell modules 1 and the supporting member 3. Further, lengths of longer sides of the solar cell modules 1 are set to be 900 mm to 2000 mm and lengths of shorter sides of the solar cell modules 1 are set to be substantially half the lengths of the longer sides. Moreover, the securing member 10 is formed with an appropriate material having excellent strength and weathering resistance, such as a synthetic resin and a metal.

Next, installation procedures of the solar cell module 1 on the roof material 2 using the securing structure in the embodiment are described. At first, a plurality of (two in the embodiment) supporting members 3 are mounted on the roof material 2 at a predetermined space so as to be substantially parallel with each other by a well-known method. At this time, the supporting members 3 are mounted such that the openings 3a direct upward. The lengths of the supporting members 3 are set to be slightly longer than the entire length when the plurality of solar cell modules 1 is aligned. Further, the plurality of supporting members 3 is mounted on the roof material 2 so as to extend in the direction intersecting with the longer sides of the solar cell modules 1. It is to be noted that when the solar cell modules 1 are installed on the inclined roof, the supporting members 3 are mounted so as to extend in the inclination direction of the roof.

After the supporting members 3 have been mounted on the roof material 2, the main body portions 11 of the securing members 10 are inserted into the supporting members 3 from the upper sides of the openings 3a at predetermined positions in the vicinity of one ends (ends at the eaves side) of the supporting members 3. At this time, the main body portions 11 are inserted into the supporting members 3 such that the surfaces of the plate-like shaft portions 14 on the securing members 10 direct to the direction orthogonal to the lengthwise direction of the supporting members 3. With this, the inclined surfaces 12b of the locking pieces 12, which project from both ends of the main body portions 11 in the lengthwise direction, abut against side edges of the openings 3a. Then, if the main body portions 11 are further moved downward and are inserted into the supporting members 3, forces of pressing the locking pieces 12 to the sides of the main body portions 11 through the inclined surfaces 12b act and the locking pieces 12 are put in the main body portions 11 against elastic forces applied to lower ends of the locking pieces 12, which are coupled to the main body portions 11.

Further, if the securing members 10 are moved downward and the locking portions 12a of the locking pieces 12 are moved to the lower sides with respect to the lower surfaces of the installing portions 3b of the supporting members 3, abutments between the locking pieces 12 (inclined surfaces 12b) and the side edges of the openings 3a are released. Then, the locking pieces 12 are restored to original states of projecting outward from the main body portions 11 with the elastic forces. In this state, if the securing members 10 are pulled to the upper side, the locking portions 12a of the locking pieces 12 abut against the lower surfaces of the installing portions 3b of the supporting members 3 so as to prevent the securing members 10 from being drawn out from the supporting members 3.

Then, after the securing members 10 have been locked to one ends of the supporting members 3, the solar cell module 1 is installed on the installing portions 3b of the supporting members 3 and the side thereof is inserted into between the installing portions 3b of the supporting members 3 and the supporting pieces 15 of the securing members 10. With this, one end side (eaves side) of the solar cell module 1 is made into a state of being secured to the supporting members 3 by the securing members 10.

After one end side of the solar cell module 1 has been secured to the supporting members 3, as illustrated in Fig. 4A, side surfaces of the main body portions 11 of new securing members 10 are made to abut against the side of the solar cell module 1 at the other end side (ridge side) and the main body portions 11 are inserted into the supporting members 3 through the openings 3a. Then, the locking portions 12a of the locking pieces 12 are locked to the lower surfaces of the installing portions 3b and the lower surfaces of the supporting pieces 15 are made to abut against the upper surface of the solar cell module 1 (see, Fig. 4B). With this, the other end side of the solar cell module 1 is made into a state of being secured to the supporting members 3 and the first solar cell module 1 is secured to the supporting members 3.

Subsequently, as illustrated in Fig. 4B, one end side (eaves side) of the subsequent solar cell module 1 is slide to the side of the securing members 10 which are locked and secured to the supporting members 3 in a state of being installed on the supporting members 3 and inclined. Then, the upper surface of the side of the solar cell module 1 at one end side is inserted to the lower sides of the supporting pieces 15 of the secured securing members 10. After that, the entire inclined solar cell module 1 is installed on the installing portions 3b so as to be parallel with the supporting members 3 and the side of the solar cell module 1 is made to abut against the side surfaces of the main body portions 11 of the securing members 10 (see, Fig. 2A). With this, one end side of the subsequent solar cell module 1 is made into a state of being secured to the supporting members 3. Then, the other end side (ridge side) of the solar cell module 1 is secured with the securing members 10 in the same manner as described above so that the plurality of solar cell modules 1 are completely installed on the roof material 2.

It is to be noted that at the time of installation and maintenance of the solar cell module 1, when the securing members 10 locked and secured to the supporting members 3 are detached, the pair of operation pieces 13 of which front ends project to the outer sides with respect to both side surfaces of the supporting members 3 are pressed in the directions of making closer to each other against the elastic forces to be applied to the locking pieces 12. With this, the locking pieces 12 are put in the main body portions 11 and locking between the locking portions 12a of the locking pieces 12 and the lower surfaces of the installing portions 3b can be cancelled. In this state, the securing members 10 are moved upward so that the securing members 10 can be detached from the supporting members 3.

In this manner, with the securing structure according to the embodiment, the pair of locking pieces 12 of the securing member 10 are made to project outward from the main body portion 11 with the elastic forces so as to be locked to the supporting member 3. Therefore, the solar cell module 1 (plate-like module) can be secured to the supporting member 3 easily through the securing member 10 without using a bolt, a nut, a screw, or the like unlike the conventional techniques. Therefore, the securing structure of the solar cell module 1 with high construction property can be provided and construction cost taken to install the solar cell module 1 can be reduced.

Further, the solar cell modules 1 are secured to the supporting member 3 by the pair of locking pieces 12 and the supporting piece 15 projecting from the main body portion 11 of the securing member 10. Therefore, a space for fastening the bolt, the nut, or the like is not required to be ensured between the solar cell modules 1 so as to make the space between the solar cell modules 1 as small as possible. Accordingly, the overall area of the solar cell modules 1 can be made smaller relative to the area on the roof, thereby enhancing energy efficiency.

In addition, the inclined surfaces 12b that are inclined so as to be closer to the side of the main body portion 11 toward the lower side are provided in the locking pieces 12 of the securing member 10. The locking pieces 12 can be put in the main body portion 11 only by inserting the main body portion 11 into the supporting member 3 from the upper side. Therefore, when the securing member 10 is locked and secured to the supporting member 3, the pair of locking pieces 12 is not required to be put in the main body portion previously. Therefore, the solar cell module 1 can be secured to the supporting member 3 through the securing member 10 easily. This makes it possible to enhance construction property of the solar cell module 1.

Further, the locking pieces 12 are put into the main body portion 11 by operating the pair of operation pieces 13 of the securing member 10 locked and secured to the supporting member 3 so that the locking between the locking pieces 12 and the supporting member 3 can be cancelled. With this, the securing member 10 can be detached from the supporting member 3 easily. Accordingly, when a position of the securing member 10 is changed during construction of the solar cell module 1 or when the solar cell module 1 is detached from the supporting member 3 for maintenance or the like, the locking by the locking pieces 12 can be cancelled easily by operating the operation pieces 13 so as to detach the securing member 10. This makes it possible to enhance construction property and maintenance property of the solar cell module 1.

Further, two solar cell modules 1 can be secured at both sides so as to sandwich the shaft portion 14 of the securing member 10. Therefore, the plurality of solar cell modules 1 can be secured onto the roof material 2 from one side (eaves side) to the other side (ridge side) sequentially as described above. Accordingly, the plurality of solar cell modules 1 can be installed on the roof material 2 easily. This makes it possible to enhance construction property of the solar cell module 1.

As described above, the invention has been described by using a preferable embodiment. However, the invention is not limited to the embodiment and various improvements and changes in design can be made in a range without departing from a scope of the invention, as will be described below.

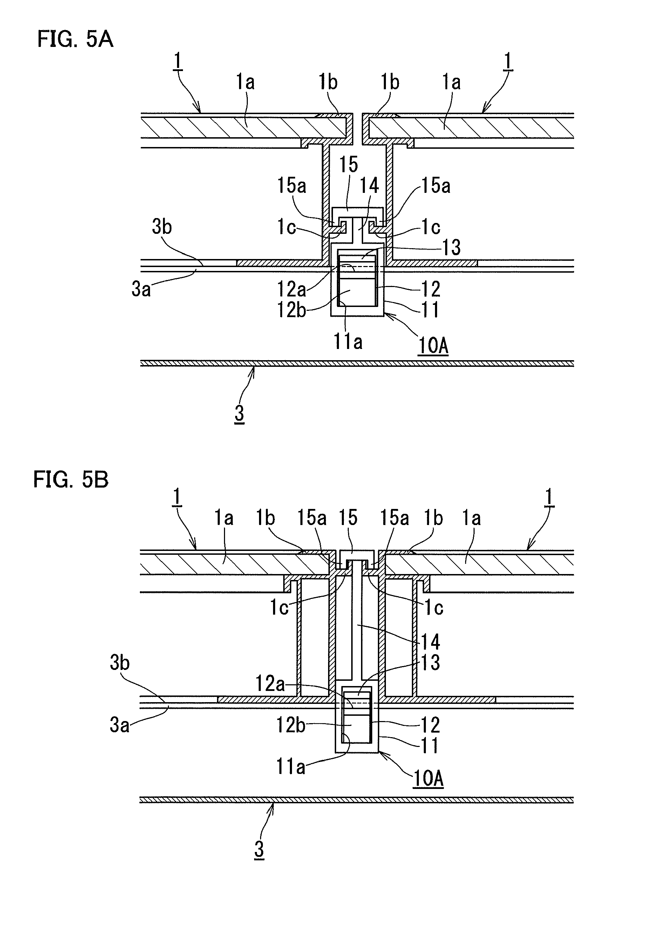

That is to say, in the above-mentioned embodiment, the securing member 10 in a mode corresponding to the solar cell module 1 having flat side surfaces has been described. However, the invention is not limited thereto and a securing member 10A corresponding to a solar cell module 1A having hook-shaped click portions 1c on side surfaces as illustrated in Figs. 5A and 5B may be employed, for example.

At first, the solar cell module 1A in the example as illustrated in Fig. 5A is formed in the following manner. That is, side surfaces of the frame bodies 1b at the lower sides with respect to the solar cell panels 1a are recessed inward and the hook-shaped click portions 1c which extend outward and of which front ends are bent upward are provided on the recessed portions of the side surfaces. On the other hand, the solar cell module 1A in the example as illustrated in Fig. 5B is formed in the following manner. That is, the side surfaces of the frame bodies 1b are formed as substantially perpendicular flat surfaces and the hook-shaped click portions 1c which extend outward and of which front ends are bent upward are provided in the vicinity of upper ends of the side surfaces. The securing member 10A as illustrated in Figs. 5A and 5B includes drooping portions 15a which droop downward on both end of the supporting piece 15. The drooping portions 15a are engaged with the click portions 1c of the solar cell module 1A. It is to be noted that the securing member 10A has the same configuration as the above-described securing member 10 other than the height of the shaft portion 14 corresponds to the height of the click portions 1c. The components of the securing member 10A which are the same as those of the securing member 10 are denoted with the same reference numerals and detail description thereof is omitted.

With the securing structure in the examples as illustrated in Figs. 5A and 5B, the same action effects as those obtained in the above-described embodiment can be obtained. In addition, the click portions 1c of the solar cell modules 1A and the drooping portions 15a of the securing member 10A are engaged with each other so as to restrict the solar cell modules 1A from sliding in the lengthwise direction of the supporting member 3. Therefore, in particular, when installed on the inclined roof material 2, the solar cell module 1A can be restricted from sliding to the eaves side even with the securing member 10A which supports a side of the solar cell module 1A at the ridge side. This makes it possible to secure the solar cell module 1A more firmly.

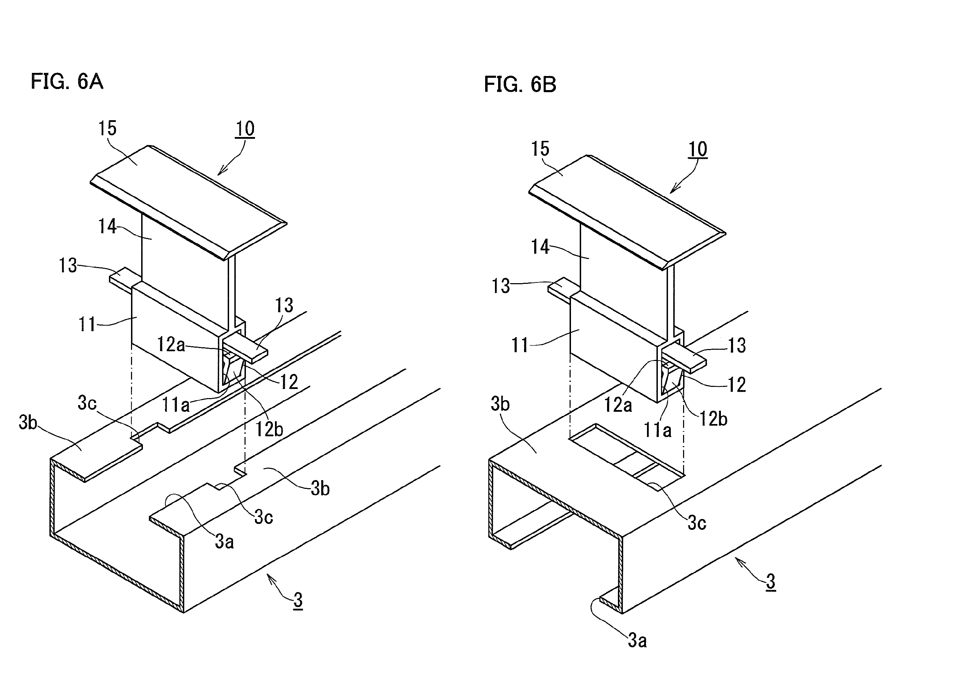

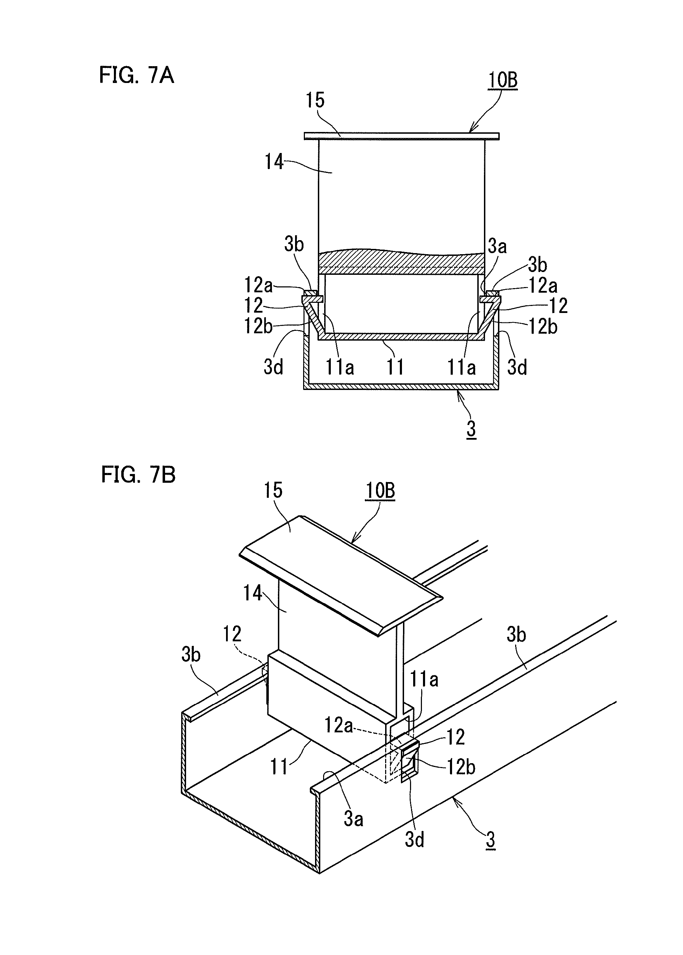

Further, in the above-described embodiment, the solar cell module 1 is prevented from sliding in the lengthwise direction of the supporting member 3 with frictional resistance between the solar cell module 1 and the supporting member 3. However, the invention is not limited thereto. For example, configurations as illustrated in Figs. 6A, 6B and Figs. 7A, 7B may be employed. It is to be noted that in the examples as illustrated in Figs. 6A, 6B and Figs. 7A, 7B, the components which are the same as those in the above examples are denoted with the same reference numerals and detail description thereof is omitted.

At first, in the example as illustrated in Fig. 6A, the length of the main body portion 11 on the securing member 10 in the lengthwise direction (direction orthogonal to the direction in which the supporting member 3 extends) is formed to be longer than the width of the opening 3a of the supporting member 3 and be shorter than the width of the supporting member 3. In addition, notch portions 3c through which the main body portion 11 of the securing member 10 can be inserted are formed on the installing portions 3b of the supporting member 3, and the main body portion 11 of the securing member 10 can be inserted into the supporting member 3 through the notch portions 3c.

Further, in the example as illustrated in Fig. 6B, the supporting member 3 is mounted on the roof material 2 such that the opening 3a directs downward, and a surface opposed to the opening 3a corresponds to the installing portion 3b. Further, the notch portion 3c penetrating through the installing portion 3b in the up-down direction is formed at a predetermined position of the installing portion 3b is formed. The main body portion 11 of the securing member 10 can pass through the notch portion 3c. Also in this example, the main body portion 11 of the securing member 10 can be inserted into the supporting member 3 through the notch portion 3c. It is to be noted that in this example, the supporting member 3 is mounted such that the opening 3a directs downward. However, a configuration in which the opening 3a directs upward, a lower portion of the shaft portion 14 on the securing member 10 is inserted into the supporting member 3, and a part of the main body portion 11 projects to the lower side with respect to the supporting member 3 through the notch portion 3c may be employed.

Further, in the example as illustrated in Fig. 7A and 7B, locking holes 3d penetrating through side surfaces of the supporting member 3 are provided on both side surfaces of the supporting member 3. On the supporting member 3, a width of the opening 3a is made larger and widths of the installing portions 3b are made relatively smaller. The locking pieces 12 of a securing member 10B are inserted into and locked to the locking holes 3d. It is to be noted that the securing member 10B as illustrated in Fig. 7A and 7B has a configuration of including no operation piece 13 unlike the above-described securing member 10. In the example as illustrated in Fig. 7A and 7B, a part of the locking pieces 12 of the securing member 10B project outward from the locking holes 3d of the supporting member 3. Even in a state where the securing member 10B is locked to the supporting member 3, the locking pieces 12 are pressed through the locking holes 3d from the outer sides of the supporting member 3 so as to be put in the main body portion 11. Therefore, the securing member 10B can be detached from the supporting member 3 easily without the operation piece 13.

In this manner, in the examples as illustrated in Figs. 6A, 6B and Figs. 7A, 7B, the same action effects as those obtained in the above-described embodiment can be obtained. In addition, the notch portion (s) 3c through which the main body portion 11 of the securing member 10 can pass is(are) formed on the supporting member 3 or the locking holes 3d through which the locking pieces 12 of the securing member 10B can be inserted are formed. With this, portions of the securing member 10 or 10B, which directs to the lengthwise direction of the supporting member 3, abut against the notch portions 3c or the locking holes 3d so that the securing member 10 or 10B can be prevented from moving in the lengthwise direction of the supporting member 3. Therefore, a configuration with which the solar cell module 1 is secured to the supporting member 3 and is prevented from moving along the supporting member 3 is not required in addition to the securing member 10 or 10B. Accordingly, the solar cell module 1 can be prevented from moving along the supporting member 3 easily. This makes it possible to enhance construction property of the solar cell module 1.

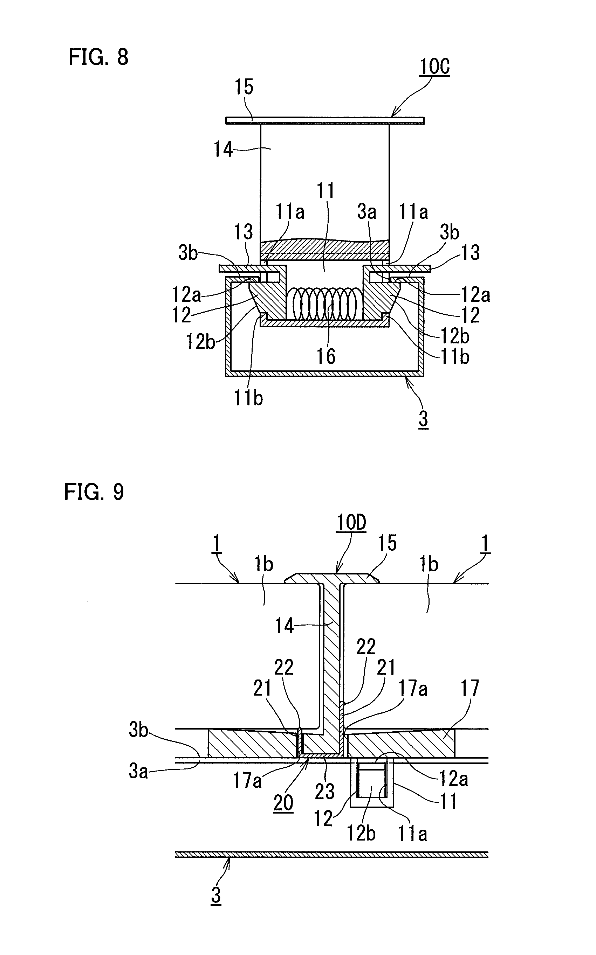

Further, in the above-described embodiment, the locking pieces 12 of the securing member 10 are coupled to the main body portion 11 integrally. However, the invention is not limited thereto. For example, as illustrated in Fig. 8, a securing member 10C in which the locking pieces 12 are configured separately from the main body portion 11 may be employed. It is to be noted that the components which are the same as those in the above embodiment are denoted with the same reference numerals and detail description thereof is omitted.

On the securing member 10C in the example as illustrated in Fig. 8, a pair of locking pieces 12 are formed in block shapes and can slide in the lengthwise direction (direction orthogonal to the direction in which the supporting member 3 extends) in the main body portion 11. Further, the securing member 10C incudes an elastic member 16 (in the example, coil spring) between the locking pieces 12. The elastic member 16 biases the pair of locking pieces 12 in the directions in which they are separated from each other. It is to be noted that the securing member 10C includes stoppers 11b which restrict projecting of the locking pieces 12 in the main body portion 11. The locking pieces 12 abut against the stoppers 11b so as to prevent the locking pieces 12 from escaping from the main body portion 11 due to the elastic forces (biasing forces) of the elastic member 16. Also in the example as illustrated in Fig. 8, the same action effects as those obtained in the above-described embodiments can be obtained.

Further, in the above-described embodiment, the solar cell modules 1 as the plate-like modules are secured by being held between the installing portions 3b of the supporting member 3 and the supporting piece 15 of the securing member 10. However, the invention is not limited thereto. For example, as illustrated in Fig. 9, a securing member 10D may include an installing piece 17 on which the solar cell modules 1 are installed and the solar cell modules 1 may be supported (held) between the installing piece 17 and the supporting piece 15. It is to be noted that the components which are the same as those in the above example are denoted with the same reference numerals and detail description thereof is omitted.

As illustrated in Fig. 9, the securing member 10D in this example includes the plate-like installing piece 17, the shaft portion 14, and the supporting piece 15. The installing piece 17 is installed on the supporting member 3. The shaft portion 14 extends upward from a substantially center of the installing piece 17 in the direction in which the supporting member 3 extends. The supporting piece 15 extends to both sides from an upper end of the shaft portion 14 so as to be substantially parallel with the installing piece 17. Further, the securing member 10D includes the main body portion 11 and the pair of locking pieces 12. The main body portion 11 projects downward from the lower surface of the installing piece 17 in the vicinity of the shaft portion 14 and is inserted into the supporting member 3. The pair of locking pieces 12 project outward from both ends of the main body portion 11 and can be locked to the lower surfaces of the installing portions 3b on the supporting member 3.

Further, the securing member 10D includes a pair of through-holes 17a and an earth clasp 20. The through-holes 17a are formed at both sides with respect to the shaft portion 14 on the installing piece 17 and penetrate through the installing piece 17 in the up-down direction. The earth clasp 20 is inserted into the pair of through-holes 17a from the lower side and electrically connects between the solar cell modules 1 supported on both sides of the shaft portion 14. The pair of through-holes 17a are formed in the following manner. That is, the through-hole 17a at one side (eaves side) with respect to the shaft portion 14 is formed at a position distanced from the shaft portion 14. The through-hole 17a at the other side (ridge side) is formed at a position along a surface of the shaft portion 14. Further, the earth clasp 20 includes a pair of erected portions 21, sticking portions 22, and a coupling portion 23. The erected portions 21 pass through the pair of through-holes 17a, respectively, and extend to the upper side with respect to the installing pieces 17. The sticking portions 22 are formed on upper ends of the erected portions 21 and stick the frame bodies 1b of the solar cell modules 1. The coupling portion 23 couples lower ends of the pair of erected portions 21.

The earth clasp 20 is formed in the following manner. That is, the erected portion 21 to be inserted into the through-hole 17a at one side is formed to be a height in the vicinity of the lower surface of the solar cell module 1. The sticking portion 22 on the upper end of the erected portion 21 is formed so as to be sharpened upward. In addition, the erected portion 21 to be inserted into the through-hole 17a at the other side is formed to be such a height that the erected portion 21 extends to the upper side with respect to the lower surface of the solar cell module 1. The sticking portion 22 on the upper end of the erected portion 21 is formed so as to be sharpened in the direction opposite to the shaft portion 14. The respective sticking portions 22 stick and break insulating films on the surfaces of the frame bodies 1b and reach electrical conductive portions. It is to be noted that the earth clasp 20 is formed with a hard metal material such as a stainless steel.

In the example as illustrated in Fig. 9, the same action effects as those obtained in the above-described embodiment can be also obtained. In addition, the earth clasp 20 can electrically connect between the solar cell modules 1 secured on both sides of the shaft portion 14 of the securing member 10D. Therefore, a troublesome task taken for earth connection can be simplified. This makes it possible to enhance construction property of the solar cell module and reduce cost. It is to be noted that although not illustrated in detail in the drawing, a configuration in which a bottom surface of the installing piece 17 on the securing member 10D is curved or bent such that a portion just under the shaft portion 14 is made higher than portions at both ends in the state before the securing member 10D is locked and secured to the supporting member 3 and the bottom surface of the installing piece 17 is deformed to have a cross section of a linear shape if the securing member 10D is secured to the supporting member 3 may be employed. With this, if the securing member 10D is secured to the supporting member 3, the supporting piece 15 is moved downward through the shaft portion 14 with the deformation of the installing piece 17. Therefore, the solar cell module 1 can be held between the supporting piece 15 and the installing piece 17. This makes it possible to secure the solar cell module 1 with the securing member 10D more firmly.

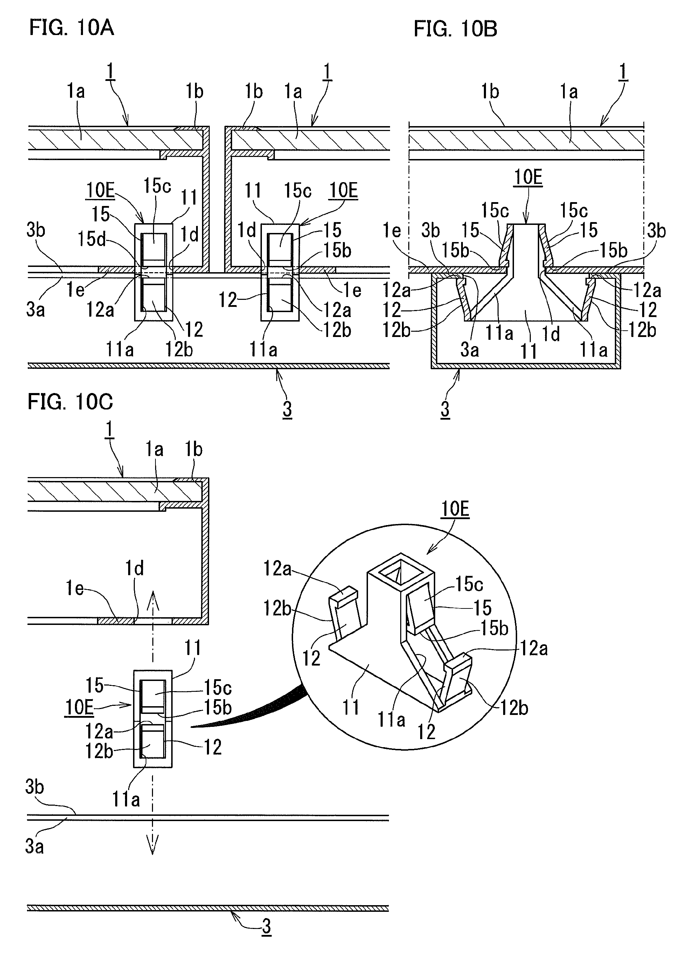

Further, in the above-mentioned embodiment, two solar cell module 1 (plate-like modules) can be secured by one securing member 10. However, the invention is not limited thereto. For example, as illustrated in Figs. 10A to 10C, a securing member 10E which can secure one solar cell module 1 only may be employed. It is to be noted that the components which are the same as those in the above embodiment are denoted with the same reference numerals and detail description thereof is omitted.

In the example as illustrated in Figs. 10A to 10C, various frame holes 1d for mounting are formed previously on a lower surface of the frame body 1b on the existing solar cell module 1, and the solar cell module 1 is secured to the supporting members 3 by using the frame holes 1d. As illustrated in Fig. 10A and the like, the securing member 10E to be used in this example includes the main body portion 11, the pair of locking pieces 12, and the supporting pieces 15. An upper portion of the main body portion 11 can be inserted into the frame hole 1d formed on a bottom piece 1e of the frame body 1b on the solar cell module 1. In addition, a lower portion of the main body portion 11 with respect to the upper portion can be inserted into the supporting member 3 through the opening 3a. The pair of locking pieces 12 project outward from both ends of the portion of the main body portion 11, which is inserted into the supporting member 3, and can be locked to the supporting member 3. The supporting pieces 15 project outward from both ends of the portion of the main body portion 11, which is inserted into the frame body 1b, and are locked to the frame body 1b so as to support the solar cell module 1.

As illustrated in Fig. 10B and the like, the main body portion 11 of the securing member 10E is formed into in the following manner. That is, an upper portion of the main body portion 11, which is inserted into the frame body 1b, is made to have a rectangular shape when seen from the front side. A lower portion of the main body portion 11, which is inserted into the supporting member 3, is made to have a triangular shape which is enlarged to both sides downward from the rectangular portion. The main body portion 11 is formed into cylindrical shapes which penetrate through in the up-down direction and openings 11a are formed on both side surfaces of the main body portion 11. Further, the locking pieces 12 of the securing member 10E include the locking portions 12a and the inclined surfaces 12b. The locking portions 12a are formed on upper ends of the locking pieces 12 located at the outer sides with respect to the main body portion 11 and abut against lower surfaces of the installing portions 3b on the supporting member 3. The inclined surfaces 12b are inclined to the side of the main body portion 11 downward from the locking portions 12a and lower ends of the inclined surfaces 12b are connected to lower sides of the openings 11a of the main body portion 11. Further, the supporting pieces 15 of the securing member 10E include supporting portions 15b and inclined surfaces 15c. The supporting portions 15b abut against an upper surface of the bottom piece 1e of the frame body 1b. The inclined surfaces 15c are inclined to the side of the main body portion 11 upward from the supporting portions 15b and upper ends of the inclined surfaces 15c are connected to upper sides of the openings 11a on the main body portion 11.

On the securing member 10E, lower ends of the locking pieces 12 and upper ends of the supporting pieces 15, which are continuous to the main body portion 11, can be deformed elastically. In a normal state, each of the upper ends and the lower ends project outward from the main body portion 11 (openings 11a). If forces are made to act on the pair of locking pieces 12 and the pair of supporting pieces 15 in the directions of making closer to each other (directions to the main body portion 11), the locking pieces 12 and the supporting pieces 15 can be put in the main body portion 11 through the openings 11a against elastic forces.

With this, if the upper portion of the main body portion 11 of the securing member 10E is inserted into the frame hole 1d from the lower side of the frame body 1b on the solar cell module 1, the inclined surfaces 15c of the supporting pieces 15 abut against side edges of the frame hole 1d so that the supporting pieces 15 are pressed to the side of the main body portion 11. Then, the supporting pieces 15 are moved to the side of the main body portion 11 against the elastic forces, the upper portion of the main body portion 11 passes through the frame hole 1d, and abutment between the inclined surfaces 15c and the frame hole 1d are released. With this, the supporting pieces 15 are restored with the elastic forces and the supporting portions 15b of the supporting pieces 15 are made into states of being capable of abutting against the upper surface of the bottom piece 1e on the frame body 1b. On the other hand, if the lower portion of the main body portion 11 of the securing member 10E is inserted into the supporting member 3 through the opening 3a from the upper side, the inclined surfaces 12b of the locking pieces 12 abut against the side edges of the openings 3a so that the locking pieces 12 are moved to the side of the main body portion 11 against the elastic forces. Then, the lower portion of the main body portion 11 is inserted into the supporting member 3 and abutment between the inclined surfaces 12b and the side edges are released. With this, the locking pieces 12 are restored with the elastic forces and are made into states of being capable of abutting against the lower surfaces of the installing portions 3b on the supporting member 3.

Accordingly, with the example as illustrated in Figs. 10A to 10C, the locking pieces 12 and the supporting pieces 15 of the securing member 10E are locked to the supporting member 3 and the frame hole 1d of the solar cell module 1, respectively. Therefore, the solar cell module 1 can be secured to the supporting member 3 easily without using a bolt, a nut, or the like. This makes it possible to enhance construction property of the solar cell module 1 and reduce the cost.

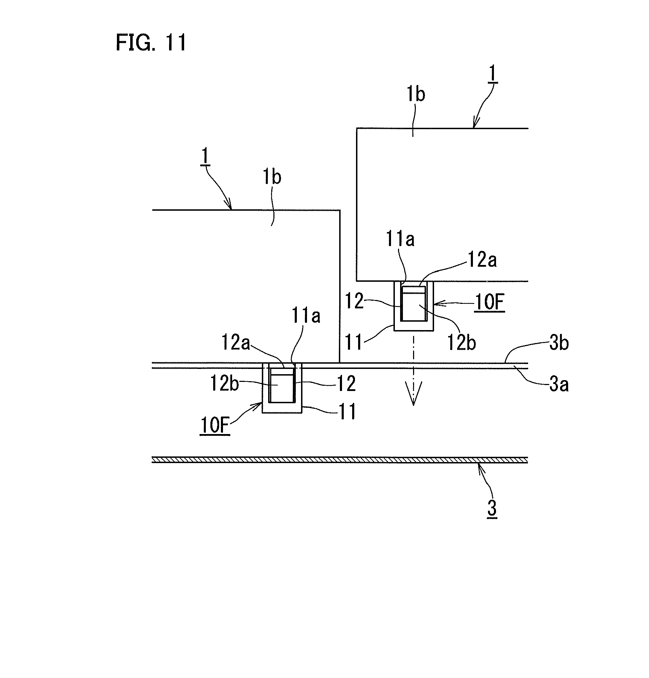

Further, in the above-mentioned embodiment, the securing member 10 is formed as a separate body from the solar cell module 1 (plate-like module). However, the invention is not limited thereto. For example, as illustrated in Fig. 11, a securing member 10F may be formed integrally with the solar cell module 1. In this example, as illustrated in Fig. 11, the securing member 10F is provided integrally at a predetermined position on a lower surface of the frame body 1b of the solar cell module 1. The securing member 10F includes the main body portion 11 and the locking pieces 12. The main body portion 11 projects downward from the frame body 1b. The locking pieces 12 project outward from both ends of the main body portion 11 in the direction orthogonal to the direction in which the supporting member 3 extends and can be locked to the supporting member 3.

On the securing member 10F in the example as illustrated in Fig. 11, the locking pieces 12 include locking portions 12a at upper ends thereof and inclined surfaces 12b. The locking portions 12a are located at the outer sides with respect to the main body portion 11 and abut against the lower surface of the installing portions 3b of the supporting member 3. The inclined surfaces 12b are inclined to the side of the main body portion 11 downward from the locking portions 12a and lower ends of the inclined surfaces 12b are connected to lower sides of the openings 11a of the main body portion 11 in an elastically deformable manner. The locking pieces 12 can be put in the main body portion 11 against elastic forces. Accordingly, in the same manner as described above, the securing member 10F projecting from the lower surface of the solar cell module 1 is inserted into the supporting member 3 through the opening 3a so that the locking pieces 12 of the securing member 10F are locked to the lower surfaces of the installing portions 3b of the supporting member 3. Therefore, the solar cell module 1 can be secured to the supporting member 3 easily. This makes it possible to improve construction property of the solar cell module.

Further, in the above-mentioned embodiment, as the supporting member 3 for installing the solar cell module 1, a crosspiece supporting member 3 which is longer than shorter sides of the solar cell module 1 (plate-like module) is employed. However, the invention is not limited thereto. For example, a supporting member which is shorter than the shorter sides of the solar cell module 1 (for example, 100 mm to 200 mm) may be employed. With this, the same action effects as those obtained in the above-described embodiment can be obtained.

In addition, in the above-mentioned embodiment, the solar cell module 1 is used as the plate-like module. However, the invention is not limited thereto. A solar-powered water heater panel, a solar collection panel, a soundproof panel, a light shielding panel or the like may be used as the plate-like module.

[Patent Document 1] Japanese Patent Application Laid-open No. 2008-101466
[Patent Document 2] Japanese Patent Application Laid-open No. 2008-303660

## Claims

1. A plate-like module securing structure comprising a securing member including:
a main body portion at least a part of which projects downward with respect to a side of a plate-like module, and
a pair of locking pieces that project outward from the main body portion in reverse directions and are capable of being put in the main body portion against elastic forces,
wherein the securing member is arranged such that the pair of locking pieces direct to a direction which is substantially orthogonal to a lengthwise direction of a supporting member mounted on a roof material,
at least a part of the main body portion is inserted into the supporting member from the upper side such that the locking pieces are located in the supporting member, and
the pair of locking pieces are locked to the supporting member so that the plate-like module is secured to the supporting member.

2. The plate-like module securing structure according to Claim 1, wherein
the securing member has the locking pieces of which side faces are formed as inclined surfaces that are inclined obliquely so as to be closer to a side of the main body portion toward the lower side.

3. The plate-like module securing structure according to Claim 1, wherein
the securing member further includes operation pieces that are coupled to upper ends of the locking pieces in the main body portion and project outward from the main body portion at the upper sides with respect to the locking pieces.

4. The plate-like module securing structure according to Claim 1, wherein
the securing member is formed as a separate body from the plate-like module, and
the securing member further includes a supporting piece that is arranged on an upper portion of the main body portion and supports a side of the plate-like module.

5. The plate-like module securing structure according to Claim 2, wherein
the securing member further includes operation pieces that are coupled to upper ends of the locking pieces in the main body portion and project outward from the main body portion at the upper sides with respect to the locking pieces.

6. The plate-like module securing structure according to Claim 2, wherein
the securing member is formed as a separate body from the plate-like module, and
the securing member further includes a supporting piece that is arranged on an upper portion of the main body portion and supports a side of the plate-like module.
